# EUROPEAN PATENT SPECIFICATION

(11) **EP 3 590 991 B1**
(45) Date of publication and mention of the grant of the patent: **01.05.2024**
(21) Application number: 18761012.6
(22) Date of filing: 27.02.2018
(51) Int. Cl.: C08G 59/56, C08G 59/62, C08J 5/04, C08J 5/24, C08G 59/68

(54) **EPOXY RESIN COMPOSITION, PREPREG AND FIBER-REINFORCED COMPOSITE MATERIAL**
EPOXIDHARZZUSAMMENSETZUNG, PREPREG UND FASERVERSTÄRKTES VERBUNDMATERIAL
COMPOSITION DE RÉSINE ÉPOXY, PRÉ-IMPRÉGNÉ ET MATÉRIAU COMPOSITE RENFORCÉ PAR FIBRES

(30) Priority: 02.03.2017 JP 2017038990
(43) Date of publication of application: 08.01.2020
(73) Proprietor: Toray Industries, Inc., Tokyo 103-8666 (JP)
(72) Inventor: MISUMI, Jun, Iyo-gun Ehime 791-3193 (JP); SAKATA, Hiroaki, Iyo-gun Ehime 791-3193 (JP)
(74) Representative: Mewburn Ellis LLP
(86) International application number: PCT/JP2018/007114
(87) International publication number: WO 2018/159574

(56) References cited:
- JP-A- S6 028 420
- JP-A- 2003 286 395
- JP-A- 2004 269 714
- JP-A- 2013 058 284
- JP-A- 2016 210 860
- US-A- 3 226 358
- US-A- 3 595 833
- US-A- 4 593 056
- US-A- 5 599 628

## Description

### TECHNICAL FIELD

The present invention relates to an epoxy resin composition, a prepreg and a fiber-reinforced composite material.

### BACKGROUND ART

Conventionally, a fiber-reinforced composite material composed of reinforced fibers such as carbon fibers and glass fibers and a thermosetting resin such as an epoxy resin and a phenol resin has been applied to many fields such as aerospace, automobiles, rail cars, marine vessels, civil engineering and construction and sporting goods since it is lightweight yet is excellent in mechanical properties such as strength and stiffness, heat resistance and corrosion resistance. Particularly, in applications requiring high performance, a fiber-reinforced composite material using continuous reinforced fibers is used. As the reinforced fibers, carbon fibers excellent in specific strength and specific modulus are used, and as a matrix resin, a thermosetting resin, particularly, an epoxy resin having adhesiveness particularly to carbon fibers, heat resistance, elastic modulus, and chemical resistance and having lowest curing shrinkage is often used. In recent years, required properties of the fiber-reinforced composite material become severe as a usage example of the material increases. Particularly, when the fiber-reinforced composite material is applied to aerospace applications and structural materials of vehicles or the like, it is required to sufficiently maintain physical properties even under high temperature and/or high humidity conditions. However, although a polymer-based composite material generally has an advantage of lightweight, its heat resistance is not high, which may limit applicable applications.

As a hardener for epoxy resin, aromatic amine compounds, acid anhydrides and phenol novolac compounds are often used in aerospace applications requiring heat resistance. However, these hardeners tend to require long heating times at high curing temperatures around 180°C during molding. When reactivity of the epoxy resin composition is low as described above, molding takes a long time, and defects such as an increase in energy cost at molding become apparent. Therefore, a technology that enables curing of the epoxy resin composition at a low temperature and in a short time has been desired.

Here, Patent Documents 1 and 2 show that the curing time of epoxy resin can be shortened by using a cationic polymerizable curing accelerator such as boron trifluoride-amine complex or a sulfonium salt.

Moreover, Patent Document 3 shows that curing time is shortened by using a microencapsulated imidazole compound as a curing accelerator, while showing good pot life at 25°C.

In Patent Document 4, a cured product which has high heat resistance is obtained by using a microencapsulated phosphorus-type curing accelerator, while maintaining good pot life at 50°C.

Patent Document 5 shows that curing time is shortened by blending a microcapsule-type cationic polymerization initiator with an epoxy resin, while maintaining good pot life.
Patent Document 6 describes resin compositions containing (a) a cycloaliphatic epoxy resin, (b) an aromatic amine hardener, and (c) a particular cure accelerator that are used to provide unreinforced castings.
Patent Document 7 describes ultraviolet light-absorbing resins that are useful for coating containers. The resins comprise an epoxy resin, an amine curing agent and substituted hydroxybenzophenones.
Patent Document 8 provides details of a curable thermosetting resin comprising an epoxy resin having at least two 1,2-epoxy groups per molecule, an aromatic diamine hardener, and an aromatic trihydroxy compound as a cure accelerator. These compounds are used to prepare fibre-reinforced prepregs and composite materials.
Patent Document 9 describes novel curing compositions for use in curing epoxy resins at low temperatures.

### PRIOR ART DOCUMENT

### PATENT DOCUMENTS

Patent Document 1: Japanese Patent Laid-open Publication No. 2001-261783
Patent Document 2: Japanese Patent Laid-open Publication No. 2002-003581
Patent Document 3: WO 01/081445 A
Patent Document 4: Japanese Patent Laid-open Publication No. 08-73566
Patent Document 5: Japanese Patent Laid-open Publication No. 2012-140574
Patent Document 6: US 5 599 628
Patent Document 7: US 3 226 358
Patent Document 8: US 4 593 056
Patent Document 9: US 3 595 833

### SUMMARY OF THE INVENTION

### PROBLEMS TO BE SOLVED BY THE INVENTION

However, when the curing accelerators described in Patent Documents 1 and 2 were used, pot life (suppression of viscosity increase) was scarce, and a curing reaction of the epoxy resin proceeded in a resin kneading process, a process for producing an intermediate substrate such as prepreg, and the like, thus, there was a defect that workability and physical properties of a cured epoxy resin were lowered, and both of them had poor practicability.

Moreover, in the technique shown in Patent Document 3, since a reaction of imidazole and epoxy occurred, heat resistance of the obtained cured epoxy resin was a low value. Further, pot life at high temperature over 80°C was not sufficient.

Also regarding Patent Document 4, shortening of the curing time of the epoxy resin composition was not sufficient, and there was a problem in fast curability.

Moreover, also regarding Patent Document 5, since it is a curing reaction by cationic polymerization of an epoxy resin, heat resistance of the obtained cured epoxy resin was a low value.

Therefore, an object of the present invention is to provide an epoxy resin composition capable of obtaining a cured epoxy resin excellent in heat resistance and having both a good pot life at a production process temperature and an excellent curability to be cured in a short time, and a prepreg and a fiber-reinforced composite material using the same.

### SOLUTIONS TO THE PROBLEMS

The inventors of the present invention have intensively repeated studies in order to solve the above problems, and have found that it is possible to achieve an excellent curability to be cured in a short time and a good pot life at a process temperature of a prepreg production simultaneously by containing a compound of the following constituent element [C] as a curing accelerator in an epoxy resin composition containing an epoxy resin and an amine hardener. Moreover, the inventors of the present invention have found that, by using the compound of the constituent element [C], a nucleophilic reaction of an amino group in the amine hardener to an epoxy group is accelerated, and the compound of the constituent element [C] has a rigid chemical structure, thus, the cured epoxy resin obtained by curing the epoxy resin composition has high heat resistance. The invention completed based on these findings has the following constitution. That is, an epoxy resin composition including at least the following constituent elements [A] to [C] and polyethersulfone wherein an equivalent ratio of functional groups of an amino group of the constituent element [B] to an epoxy group of the constituent element [A] is 0.7 to 1.5; and a blending amount of the constituent element [C] is 1 to 10 parts by mass per 100 parts by mass of the constituent element [A]:
[A] an epoxy resin,
[B] an amine hardener, and
[C] phenol compounds including any one or more of the following (c1) to (c3):
   (c1) a phenol compound having one or more carbonyl groups in one molecule,
   (c2) a phenol compound having two or more sulfonyl groups in one molecule, and
   (c3) a phenol compound having one sulfonyl group and three or more aromatic rings in one molecule.

The prepreg of the present invention is obtained by impregnating the epoxy resin composition into reinforced fibers.

A first aspect of the fiber-reinforced composite material of the present invention is obtained by curing the prepreg.

A second aspect of the fiber-reinforced composite material of the present invention includes a cured epoxy resin obtained by curing the epoxy resin composition, and reinforced fibers.

### EFFECTS OF THE INVENTION

According to the present invention, it is possible to provide an epoxy resin composition capable of obtaining a cured epoxy resin excellent in heat resistance and having both a good pot life at a production process temperature and an excellent curability to be cured in a short time, and a prepreg and a fiber-reinforced composite material using the same.

### EMBODIMENTS OF THE INVENTION

The epoxy resin composition of the present invention has the following constitution.
An epoxy resin composition including at least the constituent elements [A] to [C] and polyethersulfone, wherein an equivalent ratio of functional groups of an amino group of the constituent element [B] to an epoxy group of the constituent element [A] is 0.7 to 1.5; and a blending amount of the constituent element [C] is 1 to 10 parts by mass per 100 parts by mass of the constituent element [A]:
[A] an epoxy resin,
[B] an amine hardener, and
[C] phenol compounds including any one or more of the following (c1) to (c3):
   (c1) a phenol compound having one or more carbonyl groups in one molecule,
   (c2) a phenol compound having two or more sulfonyl groups in one molecule, and
   (c3) a phenol compound having one sulfonyl group and three or more aromatic rings in one molecule.

The constituent element [A] used in the present invention is preferably an epoxy resin having two or more glycidyl groups in one molecule. An epoxy resin having less than two glycidyl groups in one molecule is not preferable because the glass transition temperature of a cured product obtained by heat curing a mixture mixed with a hardener described later is lowered.

Examples of the epoxy resin used in the present invention include bisphenol epoxy resins such as bisphenol A epoxy resins, bisphenol F epoxy resins, bisphenol AD epoxy resins and bisphenol S epoxy resins; brominated epoxy resins such as tetrabromobisphenol A diglycidyl ethers; epoxy resins having a biphenyl skeleton; epoxy resins having a naphthalene skeleton; epoxy resins having a dicyclopentadiene skeleton; novolac epoxy resins such as phenol novolac epoxy resins and cresol novolac epoxy resins; glycidyl amine epoxy resins such as N,N,O-triglycidyl-m-aminophenol, N,N,O-triglycidyl-p-aminophenol, N,N,O-triglycidyl-4-amino-3-methylphenol, N,N,N',N'-tetraglycidyl-4,4'-methylenedianiline, N,N,N',N'-tetraglycidyl-2,2'-diethyl-4,4'-methylenedianiline, N,N,N',N'-tetraglycidyl-m-xylylenediamine, N,N-diglycidyl aniline and N,N-diglycidyl-o-toluidine; resorcinol diglycidyl ether; triglycidyl isocyanurate; and the like.

Among them, it is preferable that the constituent element [A] contains 40 to 100 parts by mass of a glycidyl amine epoxy resin per 100 parts by mass of all epoxy resins. By containing the glycidyl amine epoxy resin in such a ratio, a cured epoxy resin having a higher glass transition temperature (hereinafter sometimes simply referred to as a cured resin), that is, a cured epoxy resin excellent in heat resistance is easily obtained.

These epoxy resins may be used alone or in combination of plural kinds thereof. Using an epoxy resin showing fluidity at an arbitrary temperature in combination with an epoxy resin showing no fluidity at an arbitrary temperature is effective for fluidity control of the matrix resin when heat curing the obtained prepreg. For example, when the matrix resin has high fluidity before its gelation during heat curing, an orientation of the reinforced fibers is disturbed, or the matrix resin flows out of the system, resulting in that a fiber mass content may be out of the predetermined range. As a result, mechanical properties of the obtained fiber-reinforced composite material may be reduced. In addition, combining plural kinds of epoxy resins showing different viscoelastic behavior at an arbitrary temperature is also effective for making tackiness properties and drapability of the obtained prepreg appropriate.

The epoxy resin composition of the present invention can appropriately contain epoxy resins other than the constituent element [A], for example, a monoepoxy resin having only one epoxy group in one molecule, an alicyclic epoxy resin or the like, as far as heat resistance and mechanical properties are not significantly decreased.

Examples of the amine hardener of the constituent element [B] contained in the present invention include dicyandiamides, hydrazide compounds, amine compounds, and the like.

Among them, by using an aromatic amine compound as a hardener for the constituent element [B], a cured epoxy resin with good heat resistance is easily obtained. Examples of the aromatic amine compound include 3,3'-diisopropyl-4,4'-diaminodiphenylmethane, 3,3'-di-t-butyl-4,4'-diaminodiphenylmethane, 3,3',5,5'-tetraethyl-4,4'-diaminodiphenylmethane, 3,3'-diaminodiphenylmethane, 4,4'-diaminodiphenylmethane, 3,3'-diisopropyl-4,4'-diaminodiphenyl ketone, 3,3'-di-t-butyl-4,4'-diaminodiphenyl ketone, 3,3',5,5'-tetraethyl-4,4'-diaminodiphenyl ketone, 4,4'-diaminodiphenyl ketone, 3,3'-diaminodiphenyl ketone, 3,3'-diisopropyl-4,4'-diaminodiphenyl sulfone, 3,3'-di-t-butyl-4,4'-diaminodiphenyl sulfone, 3,3',5,5'-tetraethyl-4,4'-diaminodiphenyl sulfone, 4,4'-diaminodiphenyl sulfone, 3,3'-diaminodiphenyl sulfone, m-phenylenediamine, m-xylylenediamine, diethyltoluenediamine, and the like.

Among them, in the case of aircraft, spacecraft applications and the like, the constituent element [B] preferably contains diaminodiphenyl sulfone or diaminodiphenyl ketone since it becomes easy to obtain a cured product which is excellent in heat resistance and elastic modulus, in which decrease in heat resistance due to linear expansion coefficient and water absorption is small. These aromatic amine compounds may be used alone or in mixture of two or more kinds as appropriate. Moreover, when mixed with other components, the aromatic amine compound may be any form of powder or liquid, and powdery and liquid aromatic amine compounds may be mixed and used.

The constituent element [C] in the present invention is a phenol compound including any one or more of the above (c1) to (c3). The constituent element [C] is used as an accelerator for the reaction between the epoxy resin of the constituent element [A] and the amine hardener of the constituent element [B]. Since the compound of the constituent element [C] has acidity, it promotes ring opening of the epoxy group in the constituent element [A], and the nucleophilic reaction of the amino group in the constituent element [B] to the epoxy group in the constituent element [A] is accelerated. Therefore, it is presumed that the time required to complete the curing reaction can be shortened. Moreover, since the phenol compound of the constituent element [C] is not strongly acidic, it is presumed that a reaction accelerating effect is appropriately suppressed, and a good pot life at a process temperature of a prepreg production can be obtained. When a strongly acidic phenol compound is used as a curing accelerator, the curing time can be shortened, but a good pot life at a process temperature of a prepreg production cannot be obtained. Furthermore, since the phenol compound of the constituent element [C] has a rigid chemical structure, a cured epoxy resin having high heat resistance is obtained.

In the phenol compounds of the constituent element [C], examples of one corresponding to (c1) include 4,4'-dihydroxybenzophenone, 2,4'-dihydroxybenzophenone, 3,3'-dihydroxybenzophenone, 3,4'-dihydroxybenzophenone, 4,4'-dihydroxy-3,3'-dimethylbenzophenone, 2,4'-dihydroxy-3,3'-dimethylbenzophenone, 4,4'-dihydroxy-3,3',5,5'-tetraethylbenzophenone, 2,4'-dihydroxy-3,3',5,5'-tetraethylbenzophenone, 4-hydroxybenzophenone, 3-hydroxybenzophenone, 2-hydroxybenzophenone, 4-hydroxy-3-methylbenzophenone, and the like.

In the phenol compounds of the constituent element [C], examples of one corresponding to (c2) include 2,4-bis(phenylsulfonyl)phenol, 2,5-bis(phenylsulfonyl)phenol, 3,5-bis(phenylsulfonyl)phenol, 2-methyl-4,6-bis(phenylsulfonyl)phenol, and the like.

In the phenol compounds of the constituent element [C], examples of one corresponding to (c3) include 3,3'-diphenyl-4,4'-dihydroxydiphenyl sulfone, 4,4'-diphenyl-3,3'-dihydroxydiphenyl sulfone, 3,3'-diphenyl-4-hydroxydiphenyl sulfone, 4,4'-diphenyl-3-hydroxydiphenyl sulfone, and the like.

In the epoxy resin composition of the present invention, the constituent element [C] is preferably a phenol compound including the following (c4). In such a case, a better pot life is easily obtained. (c4) a phenol compound having one carbonyl group and one phenolic hydroxyl group in one molecule

The phenol compound corresponding to (c4) is a part of the phenol compound corresponding to (c1). That is, the phenol compound corresponding to (c4) also corresponds to (c1). Examples of the phenol compound corresponding to (c4) include 4-hydroxybenzophenone, 3-hydroxybenzophenone, 2-hydroxybenzophenone, 4-hydroxy-3-methylbenzophenone, and the like.

The epoxy resin composition of the present invention satisfies the following (1) and (2) simultaneously.
(1) an equivalent ratio of functional groups of an amino group of the constituent element [B] to an epoxy group of the constituent element [A] is 0.7 to 1.5.
(2) a content of the constituent element [C] is 1 to 10 parts by mass per 100 parts by mass of the constituent element [A].

By setting the equivalent ratio of functional groups of the amino group of the constituent element [B] to the epoxy group of the constituent element [A] to 0.7 or more and 1.5 or less, excellent fast curability and heat resistance are obtained. Further, an effect of accelerating the curing reaction of the epoxy resin composition is obtained by setting the content of the constituent element [C] to 1 part by mass or more per 100 parts by mass of the constituent element [A], and deterioration of the pot life of the epoxy resin composition can be suppressed by setting to 10 parts by mass or less. Here, the equivalent ratio of functional groups of the amino group of the constituent element [B] to the epoxy group of the constituent element [A] is calculated as follows. Equivalent ratio = (Number of parts by mass of constituent element [B]/Active hydrogen equivalent of constituent element [B])/(Number of parts by mass of constituent element [A]/Epoxy equivalent weight of constituent element [A]).

When containing two or more components of the constituent element [A] or the constituent element [B], the equivalent ratio is calculated by a sum of the number of moles of functional groups of each component. For example, in the case of containing two components, it is calculated as follows. Equivalent ratio = (Number of parts by mass of constituent element [B] component 1/Active hydrogen equivalent of constituent element [B] component 1 + Number of parts by mass of constituent element [B] component 2/Active hydrogen equivalent of constituent element [B] component 2)/(Number of parts by mass of constituent element [A] component 1/Epoxy equivalent weight of constituent element [A] component 1 + Number of parts by mass of constituent element [A] component 2/Epoxy equivalent weight of constituent element [A] component 2).

In addition, although it is preferable that the constituent element [C] is a phenol compound including (c4) which is a part of the phenol compound corresponding to (c1) as described above, also at this time, it is necessary that the total blending amount of (c4) to be used as the constituent element [C], and if they are contained, other (c1) (excluding the one corresponding to (c4)), (c2) and (c3) is 1 to 10 parts by mass per 100 parts by mass of the constituent element [A].

In addition to the constituent element [C] in the present invention, it may be used in combination with other curing accelerators as long as heat resistance and thermal stability of the epoxy resin composition are not impaired. Examples of other curing accelerators include cationic polymerization initiators, tertiary amines, imidazole compounds, urea compounds, hydrazide compounds, and the like.

The epoxy resin composition of the present invention contains polyethersulfone.This thermoplastic resin is contained for imparting toughness without impairing control of the tackiness properties of the obtained prepreg, control of fluidity of a matrix resin when heat curing a prepreg and heat resistance and elastic modulus of the obtained fiber-reinforced composite material. Polyethersulphone is used since it can impart toughness without deteriorating heat resistance and mechanical properties of the obtained fiber-reinforced composite material.

As a terminal functional group of this thermoplastic resin primary amine, secondary amine, a hydroxyl group, a carboxyl group, a thiol group, an acid anhydride, a halogen group (chlorine, bromine) and the like can be used. Among them, when the terminal group is a halogen group having low reactivity with the epoxy resin, a prepreg having excellent pot life can be obtained. On the other hand, when the terminal group is a functional group other than halogen groups, it is preferable since this thermoplastic resin has high reactivity with the epoxy resin and an epoxy resin composition excellent in adhesion between the epoxy resin and the thermoplastic resin can be obtained.

The viscosity of the epoxy resin composition of the present invention when maintained at 80°C for 2 hours is preferably 4.0 times or less, and more preferably 3.0 times or less, as the initial viscosity at 80°C. The lower limit is not particularly limited, but is usually about 1.0 times. Here, a thickening ratio when maintained at 80°C for 2 hours is determined by measuring a viscosity (initial viscosity at 80°C) η*₁ when maintained at 80°C for 1 minute and a viscosity η*₁₂₀ when maintained at 80°C for 2 hours and calculating a thickening ratio of η*₁₂₀/η*₁. Here, the viscosity refers to a complex viscosity η* measured at a frequency of 0.5 Hz and a gap of 1 mm using parallel plates with a diameter of 40 mm using a dynamic viscoelasticity measuring apparatus (ARES rheometer: manufactured by TA Instruments).

The thickening ratio when maintained at 80°C can serve as an indicator of the pot life of the epoxy resin composition in the kneading process of the epoxy resin composition or in the production process of the prepreg. That is, the smaller the thickening ratio when maintained at 80°C, the better the pot life. When the thickening ratio when the epoxy resin composition is maintained at 80°C for 2 hours is 4.0 times or less, thermal stability of the epoxy resin composition is high, impregnating properties of the resin into the reinforced fiber are hardly reduced in the prepreg production process, and void is hardly formed in a molding.

When applied to structural materials such as aerospace applications and vehicles, a cured epoxy resin needs to have high heat resistance. The heat resistance can be evaluated by measuring glass transition temperature by dynamic viscoelasticity measurement. It is preferable that a cured product obtained by curing the epoxy resin composition of the present invention at 180°C for 2 hours has a glass transition temperature of 190°C or more. The upper limit of the glass transition temperature of the cured product is not particularly limited, and is preferably as high as possible, but is usually about 300°C. The higher the glass transition temperature of the epoxy resin composition, the more preferable it is since application to a member requiring higher heat resistance becomes possible.

In the present invention, it is also preferable that particles containing a thermoplastic resin as primary component (hereinafter sometimes referred to as thermoplastic resin particles) are contained. When a fiber-reinforced composite material is formed by containing thermoplastic resin particles, toughness of a resin layer formed between layers of reinforced fibers of a fiber-reinforced composite material (hereinafter may be also referred to as "interlayer resin layer") is improved, so that impact resistance is improved.

As a thermoplastic resin of the thermoplastic resin particles, a thermoplastic resin that can be mixed in the epoxy resin composition and used can be used. Among them, polyamide is most preferable, and among polyamides, polyamide 12, polyamide 6, polyamide 11, polyamide 6/12 copolymer, and a polyamide converted into semi IPN (macromolecular interpenetrating network structure) with an epoxy compound as described in Examples 1 to 7 of JP 2009-221460 A give a particularly good adhesive strength with epoxy resins.

The shape of the thermoplastic resin particles may be spherical particles, nonspherical particles, or porous particles. Spherical particles are preferable in that they are excellent in viscoelasticity since they do not lower resin flow property, have no starting point of stress concentration, and give high impact resistance.

As commercially available products of polyamide particles, SP-500, SP-10, TR-1, TR-2, 842P-48, 842P-80 (all manufactured by Toray Industries, Inc.), "Orgasol (registered trademark)" 1002D, 2001UD, 2001EXD, 2002D, 3202D, 3501D, 3502D (all manufactured by Arkema K.K.) and the like can be used. These polyamide particles may be used alone, or a plurality thereof may be used in combination.

The epoxy resin composition of the present invention can contain a coupling agent, thermosetting resin particles, inorganic fillers such as silica gel, carbon black, clay, carbon nanotube, graphene, carbon particles and metal powder or the like, as long as the effect of the present invention are not impaired.

The prepreg of the present invention is obtained by impregnating the epoxy resin composition of the present invention into reinforced fibers. That is, the prepreg of the present invention is obtained by forming the above-described epoxy resin composition into a matrix resin and combining the epoxy resin composition with reinforced fibers. Preferred examples of the reinforced fibers include carbon fibers, graphite fibers, aramid fibers, glass fibers, and the like. Among them, carbon fibers are particularly preferable.

Commercially available products of the carbon fibers include "Torayca (registered trademark)" T800G-24K, "Torayca (registered trademark)" T800S-24K, "Torayca (registered trademark)" T700G-24K, "Torayca (registered trademark)" T300-3K, and "Torayca (registered trademark)" T700S-12K (all manufactured by Toray Industries, Inc.), and the like.

The form and arrangement of the carbon fibers can be appropriately selected from long fibers, woven fabrics and the like arranged in one direction. In order to obtain a carbon fiber reinforced composite material that is lightweight and at a higher level of durability, it is preferable that the carbon fibers are in the form of continuous fibers such as long fibers (fiber bundles) and woven fabrics arranged in one direction.

The prepreg of the present invention can be produced by various known methods. For example, the prepreg can be produced by a wet process in which a matrix resin is dissolved in an organic solvent selected from acetone, methyl ethyl ketone, methanol and the like to reduce its viscosity, and impregnated into reinforced fibers, or a hot-melt process in which a matrix resin is heated to reduce its viscosity without using an organic solvent and impregnated into reinforced fibers.

In the wet process, it is possible to immerse the reinforced fibers in a liquid containing a matrix resin, then pull it up, and evaporate the organic solvent using an oven or the like to obtain a prepreg.

Further, in the hot-melt process, a method of directly impregnating reinforced fibers with a matrix resin heated to reduce its viscosity, a method of impregnating reinforced fibers with a matrix resin by first preparing a release paper sheet with a resin film once coated with a matrix resin on a release paper or the like (hereinafter also referred to as "resin film"), then laminating a resin film on the reinforced fiber side from both sides or one side of the reinforced fibers, followed by heating and pressurizing, or the like can be used.

As a method for producing the prepreg of the present invention, a hot-melt process of impregnating reinforced fibers with a matrix resin without using an organic solvent is preferable since the prepreg is substantially free of organic solvent residue.

The prepreg of the present invention preferably has an amount of reinforced fibers per unit area of 30 to 2000 g/m². When the amount of reinforced fibers is 30 g/m² or more, the number of laminated layers for obtaining a predetermined thickness can be reduced in forming the fiber-reinforced composite material, and the operation tends to be simple. On the other hand, when the amount of reinforced fibers is 2000 g/m² or less, drapability of the prepreg tends to be improved.

The fiber mass content of the prepreg of the present invention is preferably 30 to 90% by mass, more preferably 35 to 85% by mass, and further preferably 40 to 80% by mass. When the fiber mass content is 30% by mass or more, the amount of resin is not too large, advantages of the fiber-reinforced composite material excellent in specific strength and specific elastic modulus are easily obtained, and in forming the fiber-reinforced composite material, heat generation during curing is not too high. Further, when the fiber mass content is 90% by mass or less, defective impregnation of the resin hardly occurs, and voids in the obtained fiber-reinforced composite material are likely to be less.

The first aspect of the fiber-reinforced composite material of the present invention is obtained by curing the prepreg of the present invention. The fiber-reinforced composite material of this aspect can be produced by a method in which the above-described prepreg of the present invention is laminated in a predetermined form and pressurized and heated to cure the resin as an example. Here, as a method of applying heat and pressure, for example, a press molding method, an autoclave molding method, a bag molding method, a wrapping method, an internal pressure molding method or the like is adopted.

The second aspect of the fiber-reinforced composite material of the present invention includes a cured epoxy resin obtained by curing the epoxy resin composition of the present invention, and reinforced fibers. The fiber-reinforced composite material of this aspect can be prepared by a method in which reinforced fibers are directly impregnated with the epoxy resin composition of the present invention without using a prepreg, and then heat cured, for example, a molding method such as a hand lay-up method, a filament winding method, a pultrusion method, a resin injection molding method or a resin transfer molding method.

Since the fiber-reinforced composite material of the present invention can be formed in a short time as compared with a conventional fiber-reinforced composite material not containing a curing accelerator, it can largely reduce the molding time and molding cost of applicable products such as aircraft structure members, windmill blades, automobiles exterior plates, and computer applications such as IC trays and notebook computer housing.

### EXAMPLES

Hereinafter, the present invention will be described in detail with reference to examples. However, the scope of the present invention is not limited to these examples. In addition, a unit of a composition ratio "part(s)" means a part(s) by mass unless otherwise noted. Further, measurement of various properties was performed under the environment of 23°C in temperature and 50% in relative humidity unless otherwise noted.

### <Materials Used in Examples and Comparative Examples>

(1) Constituent element [A]: epoxy resin
   • Bisphenol A epoxy resin ("jER (registered trademark)" 825, manufactured by Mitsubishi Chemical Corporation) epoxy equivalent weight: 175 (g/eq.)
   · Bisphenol F epoxy resin ("EPICLON (registered trademark)" 830, manufactured by DIC Corporation) epoxy equivalent weight: 172 (g/eq.)
   · Tetraglycidyl diaminodiphenylmethane ("Araldite (registered trademark)" MY721, manufactured by Huntsman Advanced Materials GmbH) epoxy equivalent weight: 113 (g/eq.)
   · Triglycidyl-m-aminophenol ("Araldite (registered trademark)" MY0600, manufactured by Huntsman Advanced Materials GmbH) epoxy equivalent weight: 106 (g/eq.)
   · Triglycidyl-p-aminophenol ("Araldite (registered trademark)" MY0500, manufactured by Huntsman Advanced Materials GmbH) epoxy equivalent weight: 106 (g/eq.)
   • Triphenylolmethane triglycidyl ether (TACTIX742, manufactured by Huntsman Advanced Materials GmbH) epoxy equivalent weight: 160 (g/eq.).
(2) Constituent element [B]: amine hardener
   - 4,4'-Diaminodiphenyl sulfone (SEIKACURE S, manufactured by Wakayama Seika Kogyo Co., Ltd.) active hydrogen equivalent: 62 (g/eq.)
   - 3,3'-Diaminodiphenyl sulfone (3,3'-DAS, manufactured by Mitsui Fine Chemical, Inc.) active hydrogen equivalent: 62 (g/eq.).
(3) Constituent element [C]: phenol compounds corresponding to (c1) to (c4)
   • 4,4'-Dihydroxybenzophenone (corresponding to c1)
   • 4-Hydroxy benzophenone (corresponding to c4)
   • 2,4-Bis(phenylsulfonyl)phenol (corresponding to c2)
   • 3,3'-Diphenyl-4,4'-dihydroxydiphenyl sulfone (corresponding to c3).
(4) Compound X: phenol compound not included in constituent element [C]
   - 4,4'-Dihydroxydiphenyl sulfone.
(5) Thermoplastic resin
   - Polyethersulfone ("Sumika Excel (registered trademark)" PES5003P, manufactured by Sumitomo Chemical Co., Ltd.).

### <Methods for Preparation and Evaluation of Epoxy Resin Composition>

The epoxy resin compositions of the examples and comparative examples were prepared and measured by the following methods.

### (1) Preparation of epoxy resin composition

An epoxy resin corresponding to the constituent element [A] shown in Tables 1 to 6, and if necessary, a thermoplastic resin were charged into a kneading apparatus, and the mixture was heated and kneaded to dissolve the thermoplastic resin. Subsequently, the temperature was lowered to a temperature of 100°C or less while continuing the kneading, and the constituent element [B] and the constituent element [C] shown in Tables 1 to 6 (in the comparative examples, the constituent element [C] may not be added, or the compound X may be added instead of the constituent element [C]) were added and stirred to obtain an epoxy resin composition.

### (2) Method for measurement of viscosity of epoxy resin composition when maintained at 80°C for 1 minute and viscosity when maintained at 80°C for 2 hours

The viscosity of the epoxy resin composition was measured using a dynamic viscoelasticity measuring apparatus ARES rheometer (manufactured by TA Instruments). Using flat parallel plates with a diameter of 40 mm for upper and lower measuring jigs, the parallel plates were heated to 70°C, then the epoxy resin composition was set between the upper and lower measuring jigs separated with a jig distance of 1 mm, and measurements were performed in torsion mode (measuring frequency: 0.5 Hz). "The viscosity when heated up from 70°C to 80°C at a rate of 2°C/min, and maintained for 1 minute after reaching 80°C" was defined as η*₁, and "the viscosity when heated up from 70°C to 80°C at a rate of 2°C/min, and maintained for 2 hours after reaching 80°C" was defined as η*₁₂₀, and the thickening ratio (pot life) was determined by η*₁₂₀/η*₁. Here, the viscosity refers to complex viscosity η* in dynamic viscoelasticity measurement. Regarding the evaluation of pot life, in Tables 1 to 6, the thickening ratio was represented by A for 3.0 times or less, B for more than 3.0 times and 4.0 times or less, C for more than 4.0 times and 5.0 times or less, and D for more than 5.0 times.

### (3) Method for measurement of glass transition temperature of cured epoxy resin

The epoxy resin composition was injected into a mold with a length of 15 cm, a width of 13 cm and a thickness of 2 mm, then heated up from 30°C at a rate of 1.5°C/min in a hot air drier and heat cured at 180°C for 2 hours, then cooled to 30°C at a rate of 2.5°C/min to prepare a cured resin plate with a thickness of 2 mm. A test piece with a width of 12.7 mm and a length of 55 mm was cut out of the prepared cured resin plate, and its glass transition temperature was determined by a DMA method according to SACMA SRM18R-94. In a storage elastic modulus G' curve, a temperature at the intersection point between a tangent in glass region and a tangent in transition region was taken as the glass transition temperature. Here, measurements were performed at a temperature ramp rate of 5°C/min and a frequency of 1 Hz. Regarding the evaluation of heat resistance, in Tables 1 to 6, the glass transition temperature was represented by A for 190°C or more, B for 180°C or more and less than 190°C, C for 170°C or more and less than 180°C, and D for less than 170°C.

### (4) Method for measurement of gel time of epoxy resin composition

The curing reactivity of the epoxy resin composition was evaluated from changes in rotational torque with time. Here, using Rubber Process Analyzer RPA2000 (manufactured by ALPHA TECHNOLOGIES), 4.5 g of an epoxy resin composition was poured into a circular hole with a diameter of 4 cm and a depth of 3 mm, heated up from 40°C to 180°C at a rate of 1.7°C/min, and heated at 180°C for 2 hours. The time period from the start of heating at 40°C until the torque exceeded 1 dNm was defined as gel time. Regarding the evaluation of fast curability, in Tables 1 to 6, the gel time was represented by A for 80 minutes or less, B for more than 80 minutes and 90 minutes or less, C for more than 90 minutes and 95 minutes or less, and D for more than 95 minutes.

### <Examples 1 to 4 and Comparative Example 1>

As a result of using each of the phenol compounds of (c1) to (c4) shown in Table 1 as the constituent element [C], as compared with Comparative Example 1 (containing no constituent element [C]) shown in Table 5, the gel time was greatly shortened and excellent fast curability was shown while suppressing a significant increase in the thickening ratio. The glass transition temperature did not show a significant decrease in Examples 1 to 4 as compared with Comparative Example 1, and showed high values of 190°C or more.

### <Examples 5 to 18 and Comparative Examples 2 to 6>

As shown in Tables 1, 2 and 5, various epoxy resin compositions were used. In Examples 5 to 9 and Examples 15 to 18, by containing 4,4'-dihydroxybenzophenone corresponding to (c1) as the constituent element [C], the gel time was greatly shortened while suppressing a significant increase in the thickening ratio as compared with Comparative Examples 2 to 6 (containing no constituent element [C]). Further, in Examples 10 to 14, by containing 4-hydroxybenzophenone corresponding to (c4) as the constituent element [C], the thickening ratio was small as compared with Examples 5 to 9 using (c1), which was favorable. Although a slight increase in gel time and a slight decrease in heat resistance were observed as compared with Examples 5 to 9, they showed excellent values without any problem in practical use.

In Examples 5 to 9 and Examples 10 to 14, an increase in the content of tetraglycidyl diaminodiphenylmethane, which is an epoxy resin containing three or more glycidyl groups in one molecule, served to show an improvement in the glass transition temperature without an adverse influence on the fast curability or pot life, which was favorable.

### <Examples 19 to 22 and Comparative Examples 7 and 8>

As shown in Tables 2, 3 and 5, in Examples 19 to 22, the gel time was shortened while suppressing a significant increase in the thickening ratio as compared with Comparative Examples 7 and 8 (containing no constituent element [C]). Furthermore, significant reduction in the glass transition temperature was also suppressed, which was a preferable property. As a result of changing the amine hardener of the constituent element [B] from Examples 1, 2, 9 and 14 to Examples 19 to 22, while tendencies of pot life and heat resistance to slightly decrease were observed, they showed excellent values without any problem in practical use.

### <Examples 23 to 26>

As shown in Table 3, in Examples 23 to 26, as a result of changing the amine hardener of the constituent element [B] in Examples 1 and 2, the gel time was shortened while suppressing a significant increase in the thickening ratio, which showed excellent properties.

### <Examples 27 to 34>

As shown in Tables 3 and 4, as a result of changing the content of the constituent element [C] in Examples 27 to 34, while the increase in the content showed a tendency to increase the thickening ratio with shortening of the gel time, they showed excellent properties without any problem in practical use.

### <Examples 35 to 38>

As shown in Table 4, as a result of changing the content of the amine hardener of the constituent element [B], they showed a tendency to shorten the gel time with the increase in the content.

### <Comparative Examples 9 and 10>

As shown in Table 5, as a result of using the compound X not included in the constituent element [C] as a curing accelerator, the thickening ratio was high, which was an undesirable property.

### <Comparative Examples 11 to 18>

As shown in Comparative Examples 11, 13, 15, and 17 in Table 6, the content of the constituent element [C] was less than 1 part by mass per 100 parts by mass of the constituent element [A], and as a result, an effect of shortening the gel time was not sufficient, which was an undesirable result. As shown in Comparative Examples 12, 14, 16, and 18, when the content of the constituent element [C] was larger than 10 parts by mass per 100 parts by mass of the constituent element [A], an increase in the thickening ratio was remarkable, which was an undesirable property.

### <Examples 39 and 40 and Comparative Example 19>

As a result of using each of the phenol compounds of (c1) and (c4) shown in Table 4 as constituent element [C], in Example 39 and 40, the gel time was greatly shortened and excellent fast curability was exhibited while suppressing a significant increase in the thickening ratio as compared with Comparative Example 19 (containing no constituent element [C]) shown in Table 6. The glass transition temperature did not show a significant decrease in Examples 39 and 40 as compared with Comparative Example 19, and showed high values of 190°C or more.

**[Table 1]**

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| | Constituent element [A] epoxy resin | | | | | | | | | | |
| | Bisphenol A epoxy resin ("jER^{®}"825) | 40 | 40 | 40 | 40 | 100 | 80 | 60 | 20 | | 100 |
| | Bisphenol F epoxy resin ("EPICLON^{®}"830) | | | | | | | | | | |
| | Tetraglycidyl diaminodiphenylmethane ("Araldite^{®}"MY721) | 60 | 60 | 60 | 60 | | 20 | 40 | 80 | 100 | |
| | Triglycidyl-m-aminophenol ("Araldite^{®}"MY0600) | | | | | | | | | | |
| | Triglycidyl-p-aminophenol ("Araldite^{®}"MY0500) | | | | | | | | | | |
| | Triphenylolmethane triglycidyl ether (TACTIX742) | | | | | | | | | | |
| | Constituent element [B] amine hardener | | | | | | | | | | |
| | 4,4'-Diaminodiphenyl sulfone (SEIKACURE S) | 47 | 47 | 47 | 47 | 35 | 39 | 43 | 51 | 55 | 35 |
| Epoxy resin composition | 3,3'-Diaminodiphenyl sulfone (3,3'-DAS) | | | | | | | | | | |
| | 4,4'-Diaminodiphenyl ketone | | | | | | | | | | |
| | Constituent element [C] phenol compounds corresponding to (c1) to (c4) | | | | | | | | | | |
| | 4,4'-Dihydroxybenzophenone (corresponding to c1) | 3 | | | | 3 | 3 | 3 | 3 | 3 | |
| | 4-Hydroxy benzophenone (corresponding to c4) | | 3 | | | | | | | | 3 |
| | 2,4-Bis(phenylsulfonyl)phenol (corresponding to c2) | | | 3 | | | | | | | |
| | 3,3'-Diphenyl-4,4'-dihydroxydiphenyl sulfone (corresponding to c3) | | | | 3 | | | | | | |
| | Thermoplastic resin | | | | | | | | | | |
| | Polyethersulfone ("Sumika Excel^{®}"PES5003P) | 10 | 10 | 10 | 10 | 10 | 10 | 10 | 10 | 10 | 10 |
| Equivalent ratio of functional groups of amino group of constituent element [B] and epoxy group of constituent element [A] | | 1.0 | 1.0 | 1.0 | 1.0 | 1.0 | 1.0 | 1.0 | 1.0 | 1.0 | 1.0 |
| Resin composition | Thickening ratio (-) | 2.8 | 2.3 | 2.6 | 3.0 | 3.5 | 3.3 | 3.0 | 2.6 | 2.5 | 2.9 |
| properties | Pot life | A | A | A | A | B | B | A | A | A | A |
| | Gel time (min) | 75 | 80 | 78 | 73 | 70 | 72 | 74 | 77 | 80 | 75 |
| | Fast curability | A | A | A | A | A | A | A | A | A | A |
| Cured resin properties | Glass transition temperature (°C) | 199 | 195 | 198 | 203 | 180 | 187 | 192 | 210 | 222 | 180 |
| | Heat resistance | A | A | A | A | B | B | A | A | A | B |

**[Table 2]**

| | | Example 11 | Example 12 | Example 13 | Example 14 | Example 15 | Example 16 | Example 17 | Example 18 | Example 19 | Example 20 |
|---|---|---|---|---|---|---|---|---|---|---|---|
| Epoxy resin composition | Constituent element [A] epoxy resin | | | | | | | | | | |
| | Bisphenol A epoxy resin ("jER^{®}"825) | 80 | 60 | 20 | | 40 | 40 | | | 40 | |
| | Bisphenol F epoxy resin ("EPICLON^{®}"830) | | | | | | | | 40 | | |
| | Tetraglycidyl diaminodiphenylmethane ("Araldite^{®}"MY721) | 20 | 40 | 80 | 100 | | | 60 | 60 | 60 | 100 |
| | Triglycidyl-m-aminophenol ("Araldite^{®}"MY0600) | | | | | 60 | | | | | |
| | Triglycidyl-p-aminophenol ("Araldite^{®}"MY0500) | | | | | | 60 | | | | |
| | Triphenylolmethane triglycidyl ether (TACTIX742) | | | | | | | 40 | | | |
| | Constituent element [B] amine hardener | | | | | | | | | | |
| | 4,4'-Diaminodiphenyl sulfone (SEIKACURE S) | 39 | 43 | 51 | 55 | 49 | 49 | 48 | 47 | | |
| | 3,3'-Diaminodiphenyl sulfone (3,3'-DAS) | | | | | | | | | 47 | 55 |
| | 4,4'-Diaminodiphenyl ketone | | | | | | | | | | |
| | Constituent element [C] phenol compounds corresponding to (c1) to (c4) | | | | | | | | | | |
| | 4,4'-Dihydroxybenzophenone (corresponding to c1) | | | | | 3 | 3 | 3 | 3 | 3 | 3 |
| | 4-Hydroxy benzophenone (corresponding to c4) | 3 | 3 | 3 | 3 | | | | | | |
| | 2,4-Bis(phenylsulfonyl)phenol (corresponding to c2) | | | | | | | | | | |
| | 3,3'-Diphenyl-4,4'-dihydroxydiphenyl sulfone (corresponding to c3) | | | | | | | | | | |
| | Thermoplastic resin | | | | | | | | | | |
| | Polyethersulfone ("Sumika Excel^{®}"PES5003P) | 10 | 10 | 10 | 10 | 10 | 10 | 10 | 10 | 10 | 10 |
| Equivalent ratio of functional groups of amino group of constituent element [B] and epoxy group of constituent element [A] | | 1.0 | 1.0 | 1.0 | 1.0 | 1.0 | 1.0 | 1.0 | 1.0 | 1.0 | 1.0 |
| Resin | Thickening ratio (-) | 2.8 | 2.4 | 2.1 | 1.9 | 3.0 | 3.0 | 2.9 | 2.9 | 3.2 | 3.0 |
| composition properties | Pot life | A | A | A | A | A | A | A | A | B | A |
| | Gel time (min) | 77 | 79 | 82 | 85 | 73 | 74 | 75 | 75 | 70 | 74 |
| | Fast curability | B | A | B | B | A | A | A | A | A | A |
| Cured resin properties | Glass transition temperature (°C) | 185 | 190 | 207 | 219 | 191 | 195 | 224 | 190 | 190 | 215 |
| | Heat resistance | A | A | A | A | A | A | A | A | A | A |

**[Table 3]**

| | | Example 21 | Example 22 | Example 23 | Example 24 | Example 25 | Example 26 | Example 27 | Example 28 | Example 29 | Example 30 |
|---|---|---|---|---|---|---|---|---|---|---|---|
| Epoxy resin composition | Constituent element [A] epoxy resin | | | | | | | | | | |
| | Bisphenol A epoxy resin ("jER^{®}"825) | 40 | | 40 | 40 | 40 | 40 | 40 | 40 | 40 | 40 |
| | Bisphenol F epoxy resin ("EPICLON^{®}"830) | | | | | | | | | | |
| | Tetraglycidyl diaminodiphenylmethane ("Araldite^{®}"MY721) | 60 | 100 | 60 | 60 | 60 | 60 | 60 | 60 | 60 | 60 |
| | Triglycidyl-m-aminophenol ("Araldite^{®}"MY0600) | | | | | | | | | | |
| | Triglycidyl-p-aminophenol ("Araldite^{®}"MY0500) | | | | | | | | | | |
| | Triphenylolmethane triglycidyl ether (TACTIX742) | | | | | | | | | | |
| | Constituent element [B] amine hardener | | | | | | | | | | |
| | 4,4'-Diaminodiphenyl sulfone (SEIKACURE S) | | | 41 | 20 | 41 | 20 | 47 | 47 | 47 | 47 |
| | 3,3'-Diaminodiphenyl sulfone (3,3'-DAS) | 47 | 55 | | | | | | | | |
| | 4,4'-Diaminodiphenyl ketone | | | 5 | 25 | 5 | 25 | | | | |
| | Constituent element [C] phenol compounds corresponding to (c1) to (c4) | | | | | | | | | | |
| | 4,4'-Dihydroxybenzophenone (corresponding to c1) | | | 3 | 3 | | | 1 | 10 | | |
| | 4-Hydroxy benzophenone (corresponding to c4) | 3 | 3 | | | 3 | 3 | | | 1 | 10 |
| | 2,4-Bis(phenylsulfonyl)phenol (corresponding to c2) | | | | | | | | | | |
| | 3,3'-Diphenyl-4,4'-dihydroxydiphenyl sulfone (corresponding to c3) | | | | | | | | | | |
| | Thermoplastic resin | | | | | | | | | | |
| | Polyethersulfone ("Sumika Excel^{®}"PES5003P) | 10 | 10 | 10 | 10 | 10 | 10 | 10 | 10 | 10 | 10 |
| Equivalent ratio of functional groups of amino group of constituent element [B] and epoxy group of constituent element [A] | | 1.0 | 1.0 | 1.0 | 1.0 | 1.0 | 1.0 | 1.0 | 1.0 | 1.0 | 1.0 |
| Resin composition properties | Thickening ratio (-) | 2.7 | 2.5 | 2.9 | 3.8 | 2.4 | 3.2 | 2.2 | 4.6 | 1.8 | 3.8 |
| | Pot life | A | A | A | B | A | B | A | C | A | B |
| | Gel time (min) | 75 | 79 | 70 | 60 | 73 | 64 | 85 | 65 | 89 | 71 |
| | Fast curability | A | A | A | A | A | A | B | A | B | A |
| Cured resin properties | Glass transition temperature (°C) | 189 | 212 | 200 | 203 | 196 | 200 | 201 | 197 | 199 | 190 |
| | Heat resistance | B | A | A | A | A | A | A | A | A | A |

**[Table 4]**

| | | Example 31 | Example 32 | Example 33 | Example 34 | Example 35 | Example 36 | Example 37 | Example 38 | Example 39 | Example 40 |
|---|---|---|---|---|---|---|---|---|---|---|---|
| | Constituent element [A] epoxy resin | - | | | | | | | | | |
| | Bisphenol A epoxy resin ("jER^{®}"825) | 40 | 40 | 40 | 40 | 40 | 40 | 40 | 40 | 40 | 40 |
| | Bisphenol F epoxy resin ("EPICLON^{®}"830) | | | | | | | | | | |
| | Tetraglycidyl diaminodiphenylmethane ("Araldite^{®}"MY721) | 60 | 60 | 60 | 60 | 60 | 60 | 60 | 60 | 60 | 60 |
| | Triglycidyl-m-aminophenol ("Araldite^{®}"MY0600) | | | | | | | | | | |
| | Triglycidyl-p-aminophenol ("Araldite^{®}"MY0500) | | | | | | | | | | |
| | Triphenylolmethane triglycidyl ether (TACTIX742) | | | | | | | | | | |
| | Constituent element [B] amine hardener | - | | | | | | | | | |
| Epoxy resin composition | 4,4'-Diaminodiphenyl sulfone (SEIKACURE S) | 47 | 47 | 47 | 47 | 33 | 57 | 33 | 57 | 47 | 47 |
| | 3,3'-Diaminodiphenyl sulfone (3,3'-DAS) | | | | | | | | | | |
| | 4,4'-Diaminodiphenyl ketone | | | | | | | | | | |
| | Constituent element [C] phenol compounds corresponding to (c1) to (c4) | - | | | | | | | | | |
| | 4,4'-Dihydroxybenzophenone (corresponding to c1) | | | | | 3 | 3 | | | 3 | |
| | 4-Hydroxy benzophenone (corresponding to c4) | | | | | | | 3 | 3 | | 3 |
| | 2,4-Bis(phenylsulfonyl)phenol (corresponding to c2) | 1 | 10 | | | | | | | | |
| | 3,3'-Diphenyl-4,4'-dihydroxydiphenyl sulfone (corresponding to c3) | | | 1 | 10 | | | | | | |
| | Thermoplastic resin | - | | | | | | | | | |
| | Polyethersulfone ("Sumika Excel^{®}"PES5003P) | 10 | 10 | 10 | 10 | 10 | 10 | 10 | 10 | | |
| Equivalent ratio of functional groups of amino group of constituent element [B] and epoxy group of constituent element [A] | | 1.0 | 1.0 | 1.0 | 1.0 | 0.7 | 1.2 | 0.7 | 1.2 | 1.0 | 1.0 |
| Resin composition properties | Thickening ratio (-) | 2.0 | 4.0 | 2.4 | 4.9 | 2.5 | 3.5 | 2.0 | 3.0 | 2.8 | 2.3 |
| | Pot life | A | B | A | C | A | B | A | A | A | A |
| | Gel time (min) | 87 | 69 | 83 | 62 | 80 | 70 | 83 | 74 | 75 | 80 |
| | Fast curability | B | A | B | A | A | A | B | A | A | A |
| Cured resin properties | Glass transition temperature (°C) | 200 | 191 | 201 | 200 | 180 | 191 | 180 | 190 | 199 | 195 |
| | Heat resistance | A | A | A | A | B | A | B | A | A | A |

**[Table 5]**

| | | Com parative Example 1 | Com parative Example 2 | Comparative Example 3 | Comparative Example 4 | Com parative Example 5 | Com parative Example 6 | Comparative Example 7 | Comparative Example 8 | Com parative Example 9 | Com parative Example 10 |
|---|---|---|---|---|---|---|---|---|---|---|---|
| Epoxy resin composition | Constituent element [A] epoxy resin | | | | | | | | | | |
| | Bisphenol A epoxy resin ("jER^{®}"825) | 40 | 100 | 60 | | 40 | 40 | 40 | | 40 | 40 |
| | Bisphenol F epoxy resin ("EPICLON^{®}"830) | | | | | | | | | | |
| | Tetraglycidyl diaminodiphenylmethane ("Araldite^{®}"MY721) | 60 | | 40 | 100 | | | 60 | 100 | 60 | 60 |
| | Triglycidyl-m-aminophenol ("Araldite^{®}"MY0600) | | | | | 60 | | | | | |
| | Triglycidyl-p-aminophenol ("Araldite^{®}"MY0500) | | | | | | 60 | | | | |
| | Triphenylolmethane triglycidyl ether (TACTIX742) | | | | | | | | | | |
| | Constituent element [B] amine hardener | | | | | | | | | | |
| | 4,4'-Diaminodiphenyl sulfone (SEIKACURE S) | 47 | 35 | 43 | 55 | 49 | 49 | | | 47 | 47 |
| | 3,3'-Diaminodiphenyl sulfone (3,3'-DAS) | | | | | | | 47 | 55 | | |
| | Compound X phenol compound not included in constituent element [C] | | | | | | | | | | |
| | 4,4'-Dihydroxydiphenyl sulfone | | | | | | | | | 1 | 3 |
| | Thermoplastic resin | | | | | | | | | | |
| | Polyethersulfone ("Sumika Excel^{®}"PES5003P) | 10 | 10 | 10 | 10 | 10 | 10 | 10 | 10 | 10 | 10 |
| Equivalent ratio of functional groups of amino group of constituent element [B] and epoxy group of constituent element [A] | | 1.0 | 1.0 | 1.0 | 1.0 | 1.0 | 1.0 | 1.0 | 1.0 | 1.0 | 1.0 |
| Resin composition properties | Thickening ratio (-) | 1.2 | 1.4 | 1.3 | 1.1 | 1.4 | 1.4 | 1.2 | 1.1 | 4.1 | 5.1 |
| | Pot life | A | A | A | A | A | A | A | A | C | D |
| | Gel time (min) | 105 | 98 | 103 | 113 | 100 | 102 | 105 | 113 | 85 | 70 |
| | Fast curability | D | D | D | D | D | D | D | D | B | A |
| Cured resin properties | Glass transition temperature (°C) | 201 | 178 | 193 | 222 | 191 | 195 | 201 | 222 | 201 | 200 |
| | Heat resistance | A | C | A | A | A | A | A | A | A | A |

**[Table 6]**

| | | Comparative Example 11 | Comparative Example 12 | Comparative Example 13 | Com paratve Example 14 | Comparative Example 15 | Comparative Example 16 | Comparative Example 17 | Com paratve Example 18 | Comparative Example 19 |
|---|---|---|---|---|---|---|---|---|---|---|
| | Constituent element [A] epoxy resin | | | | | | | | | |
| | Bisphenol A epoxy resin ("jER^{®}"825) | 40 | 40 | 40 | 40 | 40 | 40 | 40 | 40 | 40 |
| | Bisphenol F epoxy resin ("EPICLON^{®}"830) | | | | | | | | | |
| | Tetraglycidyl diaminodiphenylmethane ("Araldite^{®}"MY721) | 60 | 60 | 60 | 60 | 60 | 60 | 60 | 60 | 60 |
| | Triglycidyl-m-aminophenol ("Araldite^{®}"MY0600) | | | | | | | | | |
| | Triglycidyl-p-aminophenol ("Araldite^{®}"MY0500) | | | | | | | | | |
| | Triphenylolmethane triglycidyl ether (TACTIX742) | | | | | | | | | |
| | Constituent element [B] amine hardener | | | | | | | | | |
| | 4,4'-Diaminodiphenyl sulfone (SEIKACURE S) | 47 | 47 | 47 | 47 | 47 | 47 | 47 | 47 | 47 |
| | 3,3'-Diaminodiphenyl sulfone (3,3'-DAS) | | | | | | | | | |
| | Constituent element [C] phenol compounds corresponding to (c1) to (c4) | | | | | | | | | |
| Epoxy resin composition | 4,4'-Dihydroxybenzophenone (corresponding to c1) | 0.5 | 15 | | | | | | | |
| | 4-Hydroxy benzophenone (corresponding to c4) | | | 0.5 | 15 | | | | | |
| | 2,4-Bis(phenylsulfonyl)phenol (corresponding to c2) | | | | | 0.5 | 15 | | | |
| | 3,3'-Diphenyl-4,4'-dihydroxydiphenyl sulfone (corresponding to c3) | | | | | | | 0.5 | 15 | |
| | Thermoplastic resin | | | | | | | | | |
| | Polyethersulfone ("Sumika Excel^{®}"PES5003P) | 10 | 10 | 10 | 10 | 10 | 10 | 10 | 10 | |
| Equivalent ratio of functional groups of amino group of constituent element [B] and epoxy group of constituent element [A] | | 1.0 | 1.0 | 1.0 | 1.0 | 1.0 | 1.0 | 1.0 | 1.0 | 1.0 |
| Resin | Thickening ratio (-) | 1.8 | 5.8 | 1.5 | 5.1 | 1.5 | 5.6 | 1.9 | 6.1 | 1.2 |
| composition properties | Pot life | A | D | A | D | A | D | A | D | A |
| | Gel time (min) | 97 | 60 | 102 | 65 | 100 | 65 | 96 | 59 | 105 |
| | Fast curability | D | A | D | A | D | A | D | A | D |
| Cured resin properties | Glass transition temperature (°C) | 201 | 195 | 200 | 186 | 201 | 188 | 201 | 199 | 201 |
| | Heat resistance | A | A | A | B | A | B | A | A | A |

## Claims

1. An epoxy resin composition comprising at least the following constituent elements [A] to [C] and polyethersulfone,
Wherein
an equivalent ratio of functional groups of an amino group of the constituent element [B] to an epoxy group of the constituent element [A] is 0.7 to 1.5 as calculated by the method of the description; and
a blending amount of the constituent element [C] is 1 to 10 parts by mass per 100 parts by mass of the constituent element [A]:
[A] an epoxy resin,
[B] an amine hardener, and
[C] phenol compounds comprising any one or more of the following (c1) to (c3):
(c1) a phenol compound having one or more carbonyl groups in one molecule,
(c2) a phenol compound having two or more sulfonyl groups in one molecule, and
(c3) a phenol compound having one sulfonyl group and three or more aromatic rings in one molecule.

2. The epoxy resin composition according to claim 1, wherein the constituent element [A] contains 40 to 100 parts by mass of a glycidyl amine epoxy resin per 100 parts by mass of all epoxy resins.

3. The epoxy resin composition according to claim 1 or 2, wherein the constituent element [B] contains diaminodiphenyl sulfone or diaminodipheny ketone.

4. The epoxy resin composition according to any one of claims 1 to 3, wherein the constituent element [C] is a phenol compound comprising the following (c4): (c4) a phenol compound having one carbonyl group and one phenolic hydroxyl group in one molecule

5. The epoxy resin composition according to any one of claims 1 to 4, wherein a glass transition temperature as measured by the method given in the present description, of a cured product obtained by curing at 180°C for 2 hours is 190°C or more.

6. The epoxy resin composition according to any one of claims 1 to 5, wherein a viscosity when maintained at 80°C for 2 hours is 4.0 times or less of an initial viscosity at 80°C.

7. A prepreg obtained by impregnating reinforced fibers with the epoxy resin composition as defined in any one of claims 1 to 6.

8. A fiber-reinforced composite material obtained by curing the prepreg as defined in claim 7.

9. A fiber-reinforced composite material comprising a cured epoxy resin obtained by curing the epoxy resin composition as defined in any one of claims 1 to 6, and reinforced fibers.

## Patentansprüche

1. Epoxidharz-Zusammensetzung, die zumindest die folgenden Bestandselemente [A] bis [C] und Polyethersulfon umfasst,
wobei
das Äquivalentverhältnis zwischen funktionellen Gruppen einer Aminogruppe des Bestandselements [B] und einer Epoxidgruppe des Bestandselements [A] 0,7 bis 1,5 beträgt, wie durch das Verfahren der Beschreibung berechnet; und
die zugemischte Menge des Bestandselements [C] 1 bis 10 Massenteile, bezogen auf 100 Massenteile des Bestandselements [A] beträgt:
[A] ein Epoxidharz,
[B] ein Aminhärter und
[C] Phenolverbindungen, die eine oder mehrere der folgenden (c1) bis (c3) umfassen:
(c1) eine Phenolverbindung, die eine oder mehrere Carbonylgruppen pro Molekül aufweist,
(c2) eine Phenolverbindung, die zwei oder mehr Sulfonylgruppen pro Molekül aufweist, und
(c3) eine Phenolverbindung, die eine Sulfonylgruppe und drei oder mehr aromatische Ringe pro Molekül aufweist.

2. Epoxidharz-Zusammensetzung nach Anspruch 1, wobei das Bestandselement [A] 40 bis 100 Massenteile eines Glycidylamin-Epoxidharzes, bezogen auf 100 Massenteile aller Epoxidharze enthält.

3. Epoxidharz-Zusammensetzung nach Anspruch 1 oder 2, wobei das Bestandselement [B] Diaminodiphenylsulfon oder Diaminodiphenylketon enthält.

4. Epoxidharz-Zusammensetzung nach einem der Ansprüche 1 bis 3, wobei das Bestandselement [C] eine Phenolverbindung ist, die die folgende (c4) umfasst:
(c4) eine Phenolverbindung, die eine Carbonylgruppe und eine Phenolhydroxylgruppe pro Molekül aufweist.

5. Epoxidharz-Zusammensetzung nach einem der Ansprüche 1 bis 4, wobei die Glasübergangstemperatur, wie durch das in der vorliegenden Beschreibung dargelegte Verfahren gemessen, eines gehärteten Produkts, das durch 2 h langes Härten bei 180 °C erhalten wird, 190 °C oder mehr beträgt.

6. Epoxidharz-Zusammensetzung nach einem der Ansprüche 1 bis 5, wobei die Viskosität, wenn sie 2 h lang auf 30 °C gehalten wurde, 4,0-mal geringer ist als eine anfängliche Viskosität bei 80 °C.

7. Prepreg, das durch Imprägnieren von Verstärkungsfasern mit einer Epoxidharz-Zusammensetzung wie in einem der Ansprüche 1 bis 6 definiert erhältlich ist.

8. Faserverstärktes Verbundmaterial, das durch Härten eines Prepregs wie in Anspruch 7 definiert erhältlich ist.

9. Faserverstärktes Verbundmaterial, das ein gehärtetes Epoxidharz, das durch Härten einer Epoxidharz-Zusammensetzung wie in einem der Ansprüche 1 bis 6 definiert erhältlich ist, und Verstärkungsfasern umfasst.

## Revendications

1. Composition de résine époxy comprenant au moins les éléments constitutifs [A] à [C] suivants et de la polyéthersulfone,
dans laquelle
un rapport équivalent de groupes fonctionnels d'un groupe amino de l'élément constitutif [B] à un groupe époxy de l'élément constitutif [A] est de 0,7 à 1,5 tel que calculé par le procédé de la description ; et
une quantité de mélange de l'élément constitutif [C] est de 1 à 10 parties en masse pour 100 parties en masse de l'élément constitutif [A] :
[A] une résine époxy,
[B] un durcisseur d'amine, et
[C] des composés phénoliques comprenant un ou plusieurs des (c1) à (c3) suivants :
(c1) un composé phénolique présentant un ou plusieurs groupes carbonyle dans une molécule,
(c2) un composé phénolique présentant deux groupes sulfonyle ou plus dans une molécule, et
(c3) un composé phénolique présentant un groupe sulfonyle et trois cycles aromatiques ou plus dans une molécule.

2. Composition de résine époxy selon la revendication 1,
dans laquelle l'élément constitutif [A] contient de 40 à 100 parties en masse d'une résine époxy de glycidylamine pour 100 parties en masse de toutes les résines époxy.

3. Composition de résine époxy selon la revendication 1 ou 2, dans laquelle l'élément constitutif [B] contient de la diaminodiphénylsulfone ou de la diaminodiphénylcétone.

4. Composition de résine époxy selon l'une quelconque des revendications 1 à 3, dans laquelle l'élément constitutif [C] est un composé phénolique comprenant le (c4) suivant :
(c4) un composé phénolique présentant un groupe carbonyle et un groupe hydroxyle phénolique dans une molécule.

5. Composition de résine époxy selon l'une quelconque des revendications 1 à 4, dans laquelle une température de transition vitreuse, telle que mesurée par le procédé donné dans la présente description, d'un produit durci obtenu par durcissement à 180°C pendant 2 heures est de 190°C ou plus.

6. Composition de résine époxy selon l'une quelconque des revendications 1 à 5, dans laquelle une viscosité, lorsqu'elle est maintenue à 80°C pendant 2 heures, est de 4,0 fois ou moins une viscosité initiale à 80°C.

7. Préimprégné obtenu par imprégnation de fibres renforcées de la composition de résine époxy selon l'une quelconque des revendications 1 à 6.

8. Matériau composite renforcé de fibres obtenu par durcissement du préimprégné tel que défini dans la revendication 7.

9. Matériau composite renforcé par des fibres comprenant une résine époxy durcie obtenue par durcissement de la composition de résine époxy telle que définie dans l'une quelconque des revendications 1 à 6, et des fibres renforcées.
